# EUROPÄISCHE PATENTSCHRIFT

(11) **EP 1 125 836 B1**
(45) Veröffentlichungstag und Bekanntmachung des Hinweises auf die Patenterteilung: **26.05.2004**
(21) Anmeldenummer: 01103723.1
(22) Anmeldetag: 15.02.2001
(51) Int. Cl.: B62M 25/04, B62K 23/06

(54) **Schalter zur Betätigung eines Getriebes an einem Fahrrad**
Bicycle gear shifter
Changement de vitesses pour bicyclette

(30) Priorität: 18.02.2000 DE 10007592
(43) Veröffentlichungstag der Anmeldung: 22.08.2001
(73) Patentinhaber: SRAM Deutschland GmbH, 97404 Schweinfurt (DE)
(72) Erfinder: Blaschke, Georg, 97505 Geldersheim (DE); Auer, Marcus, 97525 Schwebheim (DE)

(56) Entgegenhaltungen:
- CH-A- 248 670
- DE-A- 3 501 951
- DE-A- 3 809 243
- DE-C- 843 212
- US-A- 2 534 566

## Beschreibung

Die Erfindung betrifft einen Schalter für eine Fahrradgetriebe gemäß dem Oberbegriff des Anspruchs 1.

Mit der deutschen Patentanmeldung P 35 01 951.4 ist eine Schalteinrichtung für eine Mehrgangschaltung bei Fahrrädern bekannt geworden, bei der der Schalthebel an einem am Gehäuse angeordneten Lagerzapfen schwenkbeweglich gelagert und in seinem Mittelteil als Wickelkörper für das Schaltzugseil ausgebildet ist. Weiterhin ist das Mittelteil des Schalthebels mit Raststufen versehen, denen eine Rastklinke zugeordnet ist, welche ihrerseits am Schaltergrundteil radial schwenkbeweglich angelenkt ist. Die Rastklinke steht unter Einfluß der Rückstellkraft des gespannten Schaltzugseils und ist darüber hinaus mit einem beim Ausschwenken wirksamen eigenen Federelement versehen. Der Vorteil einer derart ausgestalteten Schalteinrichtung liegt bei dem Einsatz von nur wenigen Teilen, die leicht und einfach herstellbar sind und eine gute Funktion bei günstigen Herstellkosten bietet. Es hat sich jedoch gezeigt, dass Einschränkungen in der Funktion hinzunehmen sind, da Schaltverzögerungen auftreten, wenn in beispielsweise einer Getriebenabe die Schaltwilligkeit von einem Gang auf den anderen behindert ist. Dann nämlich fällt der Einfluss der Rückstellkraft des gespannten Schaltzugseils kurzzeitig aus und es gibt eine kurzzeitig kraftlose Stellung für den Schalthebel.

Ferner ist mit der GB 2 012 893 A ein Schalter für Fahrradgetriebe bekannt geworden, der als Schritt- oder Triggerschalter ausgebildet ist und die einzelnen Gangspositionen mit Hilfe von Klinken herstellt, die sowohl zum Schalten als auch zum Halten der jeweiligen Gangposition eingesetzt werden können. Es handelt sich um einen Zweihebelschalter, bei dem ein erster Schalthebel ein Zugseil in eine Spannrichtung spannt, wobei eine erste Klinke einen Wickelkörper, auf dem das Zugseil aufgewickelt wird, über eine Rastverzahnung verdreht. Die Freigabe des Zuseils in einer Freigaberichtung erfolgt über einen zweiten Hebel, der eine zweite Klinke aus einer zweiten Rastverzahnung aushebt und das Zugseil nach dem Prinzip einer Unruhe in einer mechanischen Uhr schrittweise freigibt. Es werden zwei Klinken und zwei Schalter benötigt, um den relativ einfachen Schaltschritt in beiden Richtungen durchzuführen. Der Schalter ist kompliziert und in seiner ergonomischen Bedienbarkeit noch nicht optimal ausgestaltet.

Der vorgeschlagenen Schalter hingegen besteht aus im Wesentlichen drei Teilen, die einfach im Spritzgussverfahren herstellbar sind, bei dem ein Übertragungsmittel an einem Bewegungselement angeordnet ist und durch dieses entweder gespannt oder freigegeben werden kann. Dieses Bewegungselement ist gemeinsam mit einem Griffelement um eine Drehzentrum im Gehäuse schwenkbar gelagert. Eine Klinke am Bewegungselement greift in eine Rastverzahnung im Gehäuse ein und definiert auf diese Weise die einzelnen Gangstufen im Getriebe des Fahrrades. Ebenfalls mit dem Griffelement ist eine Feder verbunden, die insbesondere in Freigaberichtung des Übertragungsmittels mit dem Griffelement derart zusammenwirkt, dass der Übergang von einer Raststufe in eine andere Raststufe eine Anfangsbeschleunigung erhält, die den Schaltprozeß in der Freigaberichtung beschleunigt und die normalerweise vorhandene Vorspannung des Übertragungsmittels aus dem Getriebe noch unterstützt. Die Klinke des Bewegungselementes wird nämlich durch einen Ausheber am Griffelement erst dann ausgehoben, wenn über die Feder am Bewegungselement bereits eine gewisse Vorspannung anliegt. Mit Hilfe dieser Vorspannung wird die nächste Gangstufe sodann beschleunigt angesteuert.

Dokument US-A-2 534 566 zeigt einen Schalter zur Betätigung eines Fahrradgetriebes mit den Merkmalen des Oberbegriffs von Anspruch 1.

Es ergibt sich somit als Aufgabe für diese Erfindung, einen aus wenigen und leicht herstellbaren Teilen bestehenden Schalter zu schaffen, der sowohl in einer Spannrichtung, wie auch in einer Freigaberichtung leicht zu schalten ist, wobei insbesondere in der Freigaberichtung der Wechsel von einer ersten auf eine zweite Schaltposition im Getriebe über ein Zugmittel beschleunigt durchführbar ist.

Die Lösung der Aufgabe ist im Kennzeichen des Hauptanspruches beschrieben. Ausgestaltungen sind den Unteransprüchen zu entnehmen.

Anhand von mehreren Figuren werden zwei Ausführungsvarianten eines einfach herzustellenden Schalters erläutert. Es zeigen:
- Fig. 1:: einen Schalter, bestehend aus im Wesentlichen drei Teilen, nämlich einem Gehäuse, einem Griffelement und einem Bewegungselement;
- Fig. 2:: die drei Teile gemäß Fig. 1, wobei eine Feder und eine Klinke einteilig mit dem Bewegungselement verbunden sind;
- Fig. 3:: eine Ausführungsvariante des Schalters gemäß Fig. 1, wobei das Bewegungselement von einem Federelement umschlossen ist, welchem die Funktion einmal der Feder und einmal der Klinke zugeordnet ist;
- Fig. 4:: den Schalter gemäß Fig. 3 in Einzelteil-Darstellung.

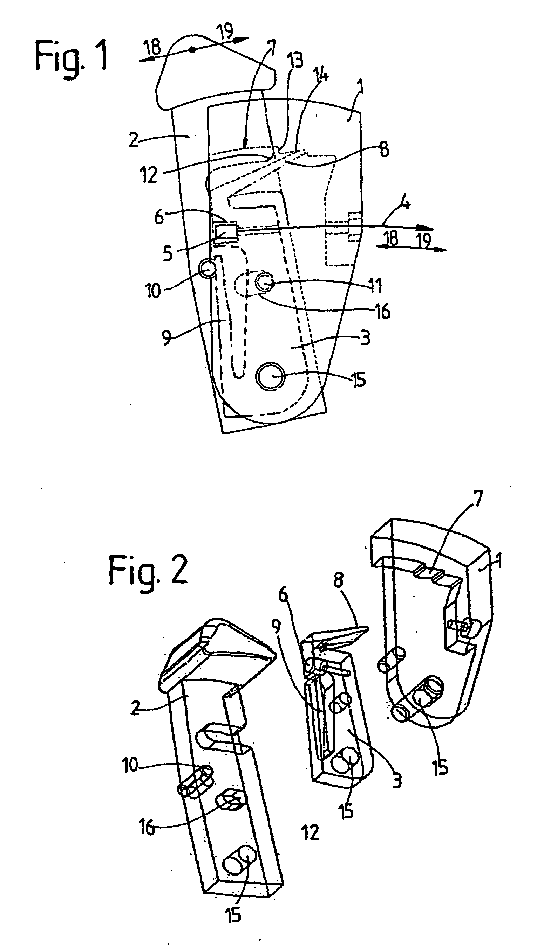

Gemäß den Figuren 1 und 2 wird ein Schalter zur Betätigung eines Getriebes am Fahrrad gezeigt, der über ein Gehäuse 1 am Fahrrad befestigbar ist. Dieses Gehäuse 1 weist eine Drehzentrum 15 auf, wo ein Griffelement 2 und ein Bewegungselement 3 schwenkbar gelagert sind. Das Bewegungselement 3 weist eine Aufnahme 6 auf, in der ein Nippel 5 eines Übertragungsmittels 4 angeordnet sein kann, wobei im Falle der Bewegung des Bewegungselements 3 in einer Spannrichtung 18 dieser Nippel 5 mitgenommen wird und mit ihm das Übertragungsmittel 4, welches den Wechsel von Gangstufen im Getriebe des Fahrrades steuert. Das Übertragungsmittel 4 wird von einer hier nicht gezeigten Feder im Getriebe vorgespannt, so dass der Nippel 5 in der Aufnahme 6 im Bewegungselement 3 über den Nippel 5 auf die Auflage 6 eine Kraft erzeugt, die das Bewegungselement 3 in einer Freigaberichtung 19 verdrehen will. Diese Verdrehung wird durch eine Klinke 8 behindert, die in eine Rastverzahnung 7 im Gehäuse 1 eingreift und sich dort derart abstützt, dass das Bewegungselement 3 nicht in der Freigaberichtung 19 bewegt werden kann. Es besteht somit zwischen dem Getriebe und dem Schalter über die Klinke 8 in der Rastverzahnung 7 ein Kräftegleichgewicht, das über das Griffelement 2 verändert werden kann. Das Griffelement 2 ist nämlich mit dem Bewegungselement 3 durch einen Gegenhalter 11 verbunden, der am Griffelement angeordnet ist und in ein Halteprofil 16 im Bewegungselement 3 eingreift. Soll also die Klinke 8 in der Rastverzahnung 7 in der Spannrichtung 18 verschoben werden, so bewegt sich mit dem Griffelement 2 der Gegenhalter 11 bis zum Anschlag am Halteprofil 16 und nimmt dann das Bewegungselement 3 mit der Klinke 8 mit, so dass diese sich innerhalb der Rastverzahnung 7 in der Spannrichtung 18 weiterbewegt. Das Griffelement 2 ist allerdings mit dem Bewegungselement 3 noch zusätzlich über einen Mitnehmer 10 verbunden, der im Griffelement 2 angeordnet ist und mit einer Feder 9 zusammenwirkt, die am Bewegungselement 3 angeordnet ist. Die Feder 9 wird vom Mitnehmer 10 in einer gewissen Vorspannung gehalten, so dass dann, wenn das Bewegungselement 3 in Ruhe verharrt, das Griffelement 2 von dem Mitnehmer 10, ausgelöst durch die Feder 9, in der Spannrichtung 18 weiterbewegt wird, bis der Gegenhalter 11 am Halteprofil 16 anliegt. Ist dies geschehen, so ist auch das Griffelement 2 an seiner Ruheposition angelangt. Soll ein Gangwechsel im Getriebe des Fahrrades stattfinden, die eine Bewegung des Griffelementes 2 in der Freigaberichtung 19 erforderlich macht, so muß die Klinke 8 ausgehoben werden, um das Bewegungselement 3 gegenüber der Rastverzahnung 7 in dieser Freigaberichtung 19 weiterzubewegen. Das Griffelement 2 weist hierfür einen Ausheber 12 auf, der mit der Klinke 8 zusammenwirkt und diese aushebt, wenn das Griffelement 2 in der Freigaberichtung 19 bewegt wird. Bevor jedoch die Klinke 8 aus ihrer Position an einer Haltefläche 13 der Rastverzahnung 7 ausgehoben wird, wird der Mitnehmer 10 gegen die Feder 9 des Bewegungselementes 3 verschoben, wodurch die Feder 9 eine gewisse Vorspannung erfährt, die das Bewegungselement 3 in der Freigaberichtung 19 vorspannt. Sobald der Ausheber 12 die Klinke 8 aus ihrer Position an der Haltefläche 13 ausgehoben hat, wird das Bewegungselement 3 sowohl durch die Vorspannung des Getriebes im Fahrrad über das Übertragungsmittel 4, als auch durch die Vorspannung der Feder 9 gegen den Mitnehmer 10 in die nächstliegende Rastposition der Rastverzahnung 7 verschoben, wobei sich die Feder 9 des Bewegungselementes 3 entspannt und dem Griffelement 2 nach erfolgter Schaltung in die nächste Position der Rastverzahnung 7 seine vorbeschriebene Ruheposition wieder verleiht, wobei der Gegenhalter 11 an dem Halteprofil 16 zur Anlage kommt.

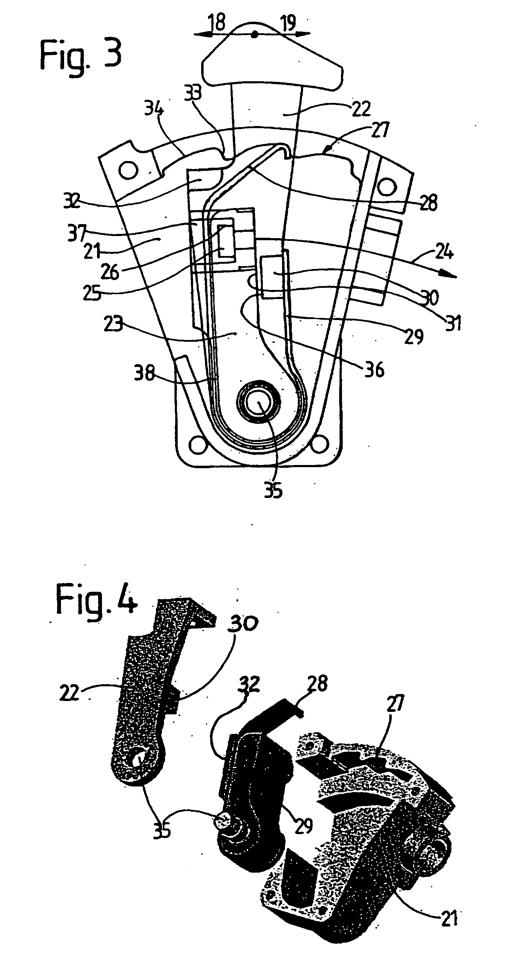

Gemäß den Fig. 3 und 4 wird eine Variante eines Schalters beschrieben, die annähernd die gleiche Funktion wie der Schalter gemäß den Fig. 1 und 2 aufweist, aber bei welchem die Klinke 8 und die Feder 9 durch ein Federelement 38 ersetzt ist. Dies bedeutet, dass ein Gehäuse 21, ein Griffelement 22 und ein Bewegungselement 23 durch ein viertes Element, nämlich das Federelement 38 ergänzt wird. Der Vorteil der Verwendung eines Federelementes 38 anstelle von angeformten Klinken 8 und Federn 9 liegt in der größeren Zuverlässigkeit eines Schalters, der auch unter extremen Bedingungen seine Funktion beweisen muß. Das Griffelement 22 und das Bewegungselement 23 sind in dem Gehäuse 21 in einem gemeinsamen Drehzentrum 35 schwenkbar gelagert, wobei ein Übertragungsmittel 24 mit einem Nippel 25 in einer Aufnahme 26 des Bewegungselementes 23 gelagert ist. So wie das Gehäuse 1 gemäß Fig. 1 eine Rastverzahnung 7 mit der Haltefläche 13 und einer Ablauffläche 14 aufweist, wird in dem Gehäuse 21 eine Rastverzahnung 27 mit ebenfalls einer Haltefläche 33 und einer Ablauffläche 34 angeordnet, in die eine Klinke 28 eingreift, die ein integraler Bestandteil des Federelementes 38 ist. Das Federelement 38 verläuft um das Drehzentrum 35 herum und schließt das Bewegungselement 23 dadurch ein, dass am anderen Ende des Federelementes 38 eine Feder 29 angeordnet ist, die das Bewegungselement 23 mit dem Griffelement 22 über einen Mitnehmer 30 verbindet. Analog zum Gegenhalter 11 im Schalter gemäß Fig. 1 wird als Gegenhalter 31 eine seitliche Fläche des Bewegungselementes 23 verwendet, gegen die ein Halteprofil 36 wirkt, wenn das Griffelement 22 in der Spannrichtung bewegt wird. Die Feder 29 liegt am Mitnehmer 30 unter Vorspannung an und erteilt dem Griffelement 22 eine Ruhestellung dann, wenn der Mitnehmer 30 an dem Gegenhalter 31 mit seinem Halteprofil 36 anliegt. Das Federelement 38 weist eine Form auf, die dem Bewegungselement 23 angepaßt ist sowohl an der Stelle, wo es um das Drehzentrum herumgeführt ist als auch an der Stelle, wo es als Klinke 28 das Bewegungselement 23 verläßt. Dort ist nämlich eine Nut angeordnet, in die das Federelement 38 einlegbar ist, wobei die Nutflanken einmal aus dem Bewegungselement 23 selbst und einmal aus einer Halterippe 37 gebildet werden.

Soll nun in der Spannrichtung 18 geschaltet werden, so wird vom Benutzer des Fahrrades das Griffelement 22 in Spannrichtung 18 bewegt, wodurch der Mitnehmer 30 am Griffelement 22 mit seinem Halteprofil 36 am Gegenhalter 31 des Bewegungselementes 23 anschlägt und dieses solange mitverschwenkt, bis die Feder 28 über die Auflauffläche 34 in die nächste gewünschte Haltefläche 33 der Rastverzahnung 27 eingerastet ist. Die Feder 29 ist in der Weise vorgespannt, dass die Ruhestellung des Griffelementes 22 dann erreicht wird, wenn das Halteprofil 36 des Mitnehmers 30 am Gegenhalter 31 zur Anlage kommt. Bei der Schaltung in der Freigaberichtung 19 wird das Griffteil 22 in dieser Richtung bewegt, wobei ein Ausheber 32, der am Griffteil 22 angeordnet ist, gegen die Klinke 28 geführt wird und diese aus ihrer Position in der Rastverzahnung 27 an deren Haltefläche 23 ausheben will. Bevor dieses geschieht, wird die Feder 29 vom Mitnehmer 30 vorgespannt, wodurch sich eine Drehkraft auf das Bewegungselement 23 überträgt, welche sich somit, ähnlich wie beim Schalter gemäß Fig. 1, in der Freigaberichtung 19 sowohl aus eben dieser Vorspannung, wie auch aus der aus dem Getriebe des Fahrrades auf das Übertragungsmittel 24 wirkenden Vorspannkraft zusammensetzt. Bei Weiterbewegung des Griffteils 22 in der Freigaberichtung 19 wird die Klinke 28 schlußendlich ausgehoben und über die Ablauffläche 34 zur nächsten Haltefläche 33 schlagartig transportiert.

Der Vorteil eines Schalters für Fahrradgetriebe gemäß der vorliegenden Erfindung liegt darin begründet, dass es mit einfachen Mitteln möglich wird, den Gangwechsel insbesondere in eine Freigaberichtung 19 schnell und nahezu unabhängig von der Vorspannkraft des Getriebes auf das Bewegungselement 3,23 über das Übertragungselement 4, 24 zu ermöglichen.

### Bezugszeichenliste

- 1.: Gehäuse
- 2.: Griffelement
- 3.: Bewegungselement
- 4.: Übertragungsmittel
- 5.: Nippel
- 6.: Aufnahme
- 7.: Rastverzahnung
- 8.: Klinke
- 9.: Feder
- 10.: Mitnehmer
- 11.: Gegenhalter
- 12.: Ausheber
- 13.: Haltefläche
- 14.: Ablauffläche
- 15.: Drehzentrum
- 16.: Halteprofil
- 18.: Spannrichtung
- 19.: Freigaberichtung
- 21.: Gehäuse
- 22.: Griffelement
- 23.: Bewegungselement
- 24.: Übertragungsmittel
- 25,: Nippel
- 26.: Aufnahme
- 27.: Rastverzahnung
- 28.: Klinke
- 29.: Feder
- 30.: Mitnehmer
- 31.: Gegenhalter
- 32.: Ausheber
- 33.: Haltefläche
- 34.: Ablauffläche
- 35.: Drehzentrum
- 36.: Halteprofil
- 37.: Halterippe
- 38.: Federelement

## Patentansprüche

1. Schalter zur Betätigung mindestens eines Getriebes an einem Fahrrad, umfassend ein Gehäuse (1,21), ein Griffelement (2,22) zur Betätigung des Schalters, ein Bewegungselement (3,23) zum Spannen eines Übertragungsmittels (4,24) und/oder zur Freigabe des Übertragungsmittels(4,24), wobei das Bewegungselement (3,23) eine Klinke (8,28) aufweist, die in eine Rastverzahnung (7,27) im Gehäuse (1,21) eingreift, und
das Griffelement (2,22) einen Ausheber (12,32) aufweist, der die Klinke (8,28) beim Schatten in einer Freigaberichtung (19) an der Rastverzahnung (7,27) aushebt, **dadurch gekennzeichnet,** und
dass während die Klinke durch den Ausheber ausgehoben wird, gleichzeitig ein Mitnehmer (10,30) am Griffteil (2,22), eine am Bewegungselement (3,23) angeordnete Feder (9,29) vorspannt, wodurch das Bewegungselement (3,23) in der Freigaberichtung (19) einen Bewegungsimpuls erhält.

2. Schalter nach Anspruch 1,
**dadurch gekennzeichnet,**
**dass** das Griffelement (2,22) und das Bewegungselement (3,23) im Gehäuse (1,21) um ein gemeinsames Drehzentrum (15,35) schwenkbar angeordnet sind.

3. Schalter nach Anspruch 1 oder 2,
**dadurch gekennzeichnet,**
**dass** das Griffelement (2,22) neben dem Mitnehmer (10,30) ein Halteprofil (16,36) aufweist, welches mit einem Gegenhalter (11,31) am Bewegungselement (2,22) zusammenwirkt.

4. Schalter nach einem der Ansprüche 1 bis 3,
**dadurch gekennzeichnet,**
**dass** das Halteprofil (16) ein Durchbruch am Griffelement (2) ist, in welchen der Gegenhalter (11) des Bewegungselementes (3) eingreift.

5. Schalter nach Anspruch 4,
**dadurch gekennzeichnet,**
**dass** die Feder (9) und/oder die Klinke (8) einteilig mit dem Bewegungselement (3) verbunden sind.

6. Schalter nach einem der Ansprüche 1 bis 3,
**dadurch gekennzeichnet,**
**dass** das Halteprofil (36) eine Fläche am Mitnehmer (30) ist, an welchem der Gegenhalter (31) des Bewegungselementes (23) anliegt.

7. Schalter nach Anspruch 6,
**dadurch gekennzeichnet,**
**dass** die Feder (29) eine Blattfeder aus Federstahl ist, die unter Vorspannung am Mitnehmer (30) anliegt und diesen gegen das Halteprofil (31) bewegt.

8. Schalter nach Anspruch 6 oder 7,
**dadurch gekennzeichnet,**
**dass** die Klinke (28) eine Blattfeder aus Federstahl ist, die mit dem Bewegungselement (23) verbunden ist.

9. Schalter nach einem der Ansprüche 6 bis 8,
**dadurch gekennzeichnet,**
**dass** die Klinke (28) formschlüssig mit dem Bewegungselement (23) verbunden ist.

10. Schalter nach einem der Ansprüche 6 bis 9,
**dadurch gekennzeichnet,**
**dass** die Klinke (28) und die Feder (29) ein einteiliges Federelement (38) bilden, welches formschlüssig mit dem Bewegungselement (23) verbunden ist.

11. Schalter nach Anspruch 9 oder 10,
**dadurch gekennzeichnet,**
**dass** das Bewegungselement (23) eine Halterippe (37) aufweist, die mit dem restlichen Körper des Bewegungselementes (23) eine Nut bildet, in welche das Federelement (38) eingelegt wird.

## Claims

1. Gear-change switch for actuating at least one gear mechanism on a bicycle, comprising a housing (1, 21), a grip element (2, 22) for actuating the gear-change switch, a movement element (3, 23) for tensioning a transmission means (4, 24) and/or for releasing the transmission means (4, 24), the movement element (3, 23) having a pawl (8, 28) which engages in a latching toothing (7, 27) in the housing (1, 21), and the grip element (2, 22) having a lift-out mechanism (12, 32) which lifts out the pawl (8, 28) when a switch is made in a release direction (19) on the latching toothing (7, 27), **characterized in that** while the pawl is being lifted out by the lift-out mechanism a driver (10, 30) on the grip (2, 22) simultaneously pretensions a spring (9, 29) arranged on the movement element (3, 23), as a result of which the movement element (3, 23) obtains a movement pulse in the release direction (19).

2. Gear-change switch according to Claim 1, **characterized in that** the grip element (2, 22) and the movement element (3, 23) are arranged in the housing (1, 21) in a manner such that they can pivot about a common turning centre (15, 35).

3. Gear-change switch according to Claim 1 or 2, **characterized in that**, in addition to the driver (10, 30), the grip element (2, 22) has a retaining profile (16, 36) which interacts with a counterholder (11, 31) on the movement element (2, 22).

4. Gear-change switch according to one of Claims 1 to 3, **characterized in that** the retaining profile (16) is an aperture on the grip element (2) in which the counterholder (11) of the movement element (3) engages.

5. Gear-change switch according to Claim 4, **characterized in that** the spring (9) and/or the pawl (8) are connected integrally to the movement element (3).

6. Gear-change switch according to one of Claims 1 to 3, **characterized in that** the retaining profile (36) is a surface on the driver (30) against which the counterholder (31) of the movement element (23) bears.

7. Gear-change switch according to Claim 6, **characterized in that** the spring (29) is a leaf spring of spring steel which bears under pretension against the driver (30) and moves the latter against the retaining profile (31).

8. Gear-change switch according to Claim 6 or 7, **characterized in that** the pawl (28) is a leaf spring of spring steel which is connected to the movement element (23).

9. Gear-change switch according to one of Claims 6 to 8, **characterized in that** the pawl (28) is connected in a form-fitting manner to the movement element (23).

10. Gear-change switch according to one of Claims 6 to 9, **characterized in that** the pawl (28) and the spring (29) form an integral spring element (38) which is connected in a form-fitting manner to the movement element (23)

11. Gear-change switch according to Claim 9 or 10, **characterized in that** the movement element (23) has a retaining rib (37) which, together with the remaining body of the movement element (23), forms a groove into which the spring element (38) is placed.

## Revendications

1. Dispositif de changement de vitesse pour l'actionnement d'au moins une boîte de vitesse bicyclette, comprenant un boîtier (1, 21), un élément de manette (2, 22) pour l'actionnement du dispositif de changement de vitesse, un élément mobile (3, 23) pour tendre un moyen de transmission (4, 24) et/ou pour la libération de l'élément de transmission (4, 24), l'élément mobile (3, 23) présentant un cliquet (8, 28) en prise dans un engrènement de verrouillage (7, 27) dans le boîtier (1, 21), et l'élément de manette (2, 22) présentant un dispositif de soulèvement (12, 32) qui soulève le cliquet (8, 28) lors du changement de vitesse dans une direction de libération (19) sur l'engrènement de verrouillage (7, 27),
**caractérisé en ce que**,
pendant que le cliquet est soulevé par le dispositif de soulèvement, un entraîneur (10, 30) sur l'élément de manette (2, 22) précontraint simultanément un ressort (9, 29) monté sur l'élément mobile (3, 23), moyennant quoi l'élément mobile (3, 23) reçoit une impulsion dé déplacement dans la direction de libération (19).

2. Dispositif de changement de vitesse selon la revendication 1,
**caractérisé en ce que**
l'élément de manette (2, 22) et l'élément mobile (3, 23) sont montés de manière à pouvoir pivoter autour d'un centre de tournage (15, 35) commun dans le boîtier (1, 21).

3. Dispositif de changement de vitesse selon l'une quelconque des revendications 1 ou 2,
**caractérisé en ce que**
l'élément de manette (2, 22) présente un profil de retenue (16, 36) en plus de l'entraîneur (10, 30), lequel coopère avec un contre-rivoir (11, 31) sur l'élément mobile (2, 22).

4. Dispositif de changement de vitesse selon l'une quelconque des revendications 1 à 3,
**caractérisé en ce que**
le profil de retenue (16) est une rupture dans l'élément de manette (2), dans laquelle le contre-rivoir (11) de l'élément mobile (3) est en prise.

5. Dispositif de changement de vitesse selon la revendication 4,
**caractérisé en ce que**
le ressort (9) et/ou le cliquet (8) sont reliés d'une seule pièce à l'élément mobile (3).

6. Dispositif de changement de vitesse selon l'une quelconque des revendications 1 à 3,
**caractérisé en ce que**
le profil de retenue (36) est une surface sur l'entraîneur (30) contre laquelle repose le contre-rivoir (31) de l'élément mobile (23).

7. Dispositif de changement de vitesse selon la revendication 6,
**caractérisé en ce que**
le ressort (29) est une tôle de ressort en acier à ressorts qui repose contre l'entraîneur (30) en étant précontrainte et déplace celui-ci contre le profil de retenue (31).

8. Dispositif de changement de vitesse selon l'une quelconque des revendications 6 ou 7,
**caractérisé en ce que**
le cliquet (28) est une tôle de ressort en acier à ressorts, laquelle est reliée à l'élément mobile (23).

9. Dispositif de changement de vitesse selon l'une quelconque des revendications 6 à 8,
**caractérisé en ce que**
le cliquet (28) est relié à l'élément mobile (23) de manière mécanique.

10. Dispositif de changement de vitesse selon l'une quelconque des revendications 6 à 9,
**caractérisé en ce que**
le cliquet (28) et le ressort (29) forment un élément de ressort (38) d'une seule pièce, lequel est relié de manière mécanique à l'élément mobile (23).

11. Dispositif de changement de vitesse selon l'une quelconque des revendications 9 ou 10,
**caractérisé en ce que**
l'élément mobile (23) présente une nervure de retenue (37) formant une rainure avec le reste du corps de l'élément mobile (23), dans laquelle l'élément de ressort (38) est déposé.
